# EUROPÄISCHE PATENTSCHRIFT

(11) **EP 1 906 219 B1**
(45) Veröffentlichungstag und Bekanntmachung des Hinweises auf die Patenterteilung: **19.02.2014**
(21) Anmeldenummer: 07450167.7
(22) Anmeldetag: 28.09.2007
(51) Int. Cl.: G02B 6/00

(54) **Vorrichtung zum Evakuieren von Personen**
Device for evacuating persons
Dispositif d'évacuation de personnes

(30) Priorität: 28.09.2006 AT 16122006
(43) Veröffentlichungstag der Anmeldung: 02.04.2008
(73) Patentinhaber: DIN-Dietmar Nocker Facilitymanagement GmbH, 4030 Linz (AT)
(72) Erfinder: Nocker, Dietmar, 6175 Ranggen/Kematen (AT)
(74) Vertreter: Jell, Friedrich

(56) Entgegenhaltungen:
- EP-A- 0 341 817
- EP-A1- 1 696 406
- WO-A-2004/076915
- WO-A2-2004/016897
- CH-A- 438 912
- US-A- 5 202 950
- US-A1- 2004 170 015

## Beschreibung

Die Erfindung betrifft eine Vorrichtung zum Evakuieren von Personen mit einer Hinweistafel, die eine auf einer lichtdurchlässigen Platte angeordnete, fixe Anzeige aufweist, wobei die Anzeige mit Hilfe des in der lichtdurchlässigen Platte geführten Lichts einer im Bereich der Stirnseite der Platte angeordneten Lichtquelle beleuchtet wird, und mit einer mit Beleuchtung der Anzeige verbundenen Steuereinrichtung zum Ein- und Ausschalten der Lichtquelle.

Um Personen aus einem Gefahrenbereich evakuieren zu können, sind aus dem Stand der Technik Hinweistafeln bekannt (AT 413 612 B), die mit einer fixen Anzeige, zum Beispiel mit Hilfe eines aufgedruckten Richtungspfeils, in Richtung eines Fluchtwegs weisen. Solche fixen Anzeigen sind meist auf einer lichtdurchlässigen Platte angeordnet, welcher Platte zur Beleuchtung der Anzeige im Bereich der Stirnseite Lichtquellen zugeordnet werden, um so die Anzeige gleichmäßig hell beleuchten zu können. Diese Hinweistafeln haben sich insbesondere durch die geringen Anschaffungs- und Betriebskosten bewährt, weil diese sowohl konstruktiv einfach sind als auch energietechnisch geringe Betriebskosten verursachen. Nun hat sich jedoch herausgestellt, daß diese Vorrichtungen Personen fehlleiten können, weil mit diesen Hinweistafeln mit fixen Anzeigen nicht auf mögliche Gefahren im Evakuierungsweg reagiert werden kann. Die Beleuchtungen der fehlleitenden Hinweistafeln können zwar mit Hilfe einer Steuereinrichtung ausgeschaltet werden, um so zu evakuierenden Personen zu warnen, jedoch haben Versuche ergeben, daß solche Beleuchtungsänderungen von den Personen ignoriert werden. Diese vermutlich dadurch, daß gerade diese Personen in deren Streßsituation solche Änderungen eher als einen technischen Defekt wahrnehmen, was auch einem Gewohnheitseffekt, gebildet durch die ständig fixen Anzeigen bzw. Hinweise der Hinweistafeln, zugerechnet werden kann. Mit den bekannten Vorrichtungen kann daher nicht ausgeschlossen werden, daß evakuierende Person fehlgeleitet werden.

Bekannt sind auch Hinweistafeln mit einer veränderbaren Anzeige (CH 438 912), im Sinne einer LCD-Anzeige (WO 96/17207) oder einer Anzeige aus nebeneinander in Fläche angeordneten lichtemittierenden Dioden (DE 201 12 037 U1). Solche Hinweistafeln können zwar auf geänderte Umstände im Evakuierungsweg hinweisen, nachteilig ist, daß diese Hinweistafeln neben den vergleichsweise höheren Herstellkosten auch eine hohe Leistungsaufnahme besitzen, was bei ständig zu beleuchteten Anzeigen nachteilig einen erheblichen Faktor für die Betriebskosten darstellt.

Die Erfindung hat sich daher die Aufgabe gestellt, eine Vorrichtung zum Evakuieren von Personen der eingangs geschilderten Art zu schaffen, die sich nicht nur durch geringe Anschaffungs- und Betriebskosten auszeichnet, sondern mit der auch schnell und sicher auf Gefahren im Evakuierungsweg reagiert werden kann.

Die Erfindung löst die gestellte Aufgabe dadurch, daß wenigstens zwei lichtdurchlässige Platten mit beleuchteten fixen Anzeigen hintereinander angeordnet sind, und daß in Abhängigkeit der aus den fixen Anzeigen darzustellenden Evakuierungshinweise die Steuereinrichtung die jeweilige Lichtquelle der Platte ein- oder ausschaltet.

Sind wenigstens zwei lichtdurchlässige Platten mit beleuchteten fixen Anzeigen hintereinander angeordnet, und schaltete in Abhängigkeit der aus den fixen Anzeigen darzustellenden Evakuierungshinweise die Steuereinrichtung die jeweilige Lichtquelle der Platte ein oder aus, so kann mit geringem konstruktiven Aufwand eine im Hinweise veränderbare Hinweistafel mit fixen Anzeigen geschaffen werden. Im Gegensatz zu den Hinweistafeln mit einer veränderbaren Anzeige verursacht die erfindungsgemäße Hinweistafel im Normalbetrieb auch keine erhöhten Betriebskosten, so daß die Vorteile einer auf Gefahren im Evakuierungsweg reagierbaren Vorrichtung mit den Vorteilen einer betriebskostenarmen Vorrichtung vereint werden können, weil im Gegensatz zu veränderbare LCD Anzeigen bzw. LED Anzeigen die Beleuchtung der fixen Anzeigen nur eine vergleichsweise geringe elektrische Leistungsaufnahme verursacht. Es kann somit erfindungsgemäß auf Gefahren im ausgezeichneten Evakuierungsweg mit einer Ansteuerung einer jeweiligen Plattenbeleuchtung reagiert werden, womit gerade fliehende und damit eingeschränkt aufmerksame Personen gewarnt werden können. Die erfindungsgemäße Vorrichtung zeichnet sich daher nicht nur durch seine geringen Anschaffungs- und Betriebskosten aus, sondern kann auch mit Bestimmtheit ausschließen, daß Gefahren im Evakuierungsweg von fliehenden Personen unberücksichtigt bleiben - sohin kann mit der Vorrichtung auch auf Gefahren im Evakuierungsweg reagiert werden.

Damit die Anzeige der dahinter liegenden Platten durch die Anzeige der vorgeordneten Platte nicht verdeckt wird, ist die darzustellende Anzeige der jeweils einen Platte vorgeordneten Platte im Überlappungsbereich mit den dahinter liegenden anderen Plattenanzeigen mit Hilfe von Ausnehmungen in die Plattenoberfläche derart eingebracht, daß wenigstens die Anzeige der dahinter liegenden Plattenanzeige sichtbar bleibt. Um solche Ausnehmungen in die Plattenoberfläche einzubringen, genügen einfache handwerkliche Fertigkeiten. Außerdem ist mit solch einer nicht verdeckenden Anzeigen eine Hinweistafel geschaffen, die nicht nur zur Anzeigenmischung genützt werden kann, sondern mit der auch ein voneinander unabhängiger Betrieb der fixen Anzeigen möglich ist.

Ist zumindest in deren Überlappungsbereich die Dichte der nebeneinander liegenden Ausnehmungen der vorgeordneten Platte geringer als die Dichte der nebeneinander liegenden Ausnehmungen der dahinter liegenden Platte, kann auf einfache Weise verhindert werden, daß die Anzeigen der dahinter liegenden Platten sichtbar bleiben.

Einfache Konstruktionsverhältnisse ergeben sich, wenn die mit Hilfe von Ausnehmungen, insbesondere Gravuren, gebildeten Anzeigen in der Art eines Musters, insbesondere Rasters, in die Plattenoberfläche eingebracht sind.

Um ein unerwünschtes Beleuchten einer Platte mit ausgeschalteten Lichtquellen zu vermeiden, kann zwischen den Lichtquellen der jeweiligen Platten eine lichtdurchlässige Abschirmung vorgesehen sein.

Geringe Betriebskosten können erreicht werden, wenn als Lichtquelle lichtemittierende Dioden vorgesehen sind.

Eine besonders gleichmäßige Ausleuchtung der Anzeigen der jeweiligen Platte kann dadurch erreicht werden, daß die Hauptabstrahlrichtung der Dioden annähernd parallel zur Flächennormalen der Plattenoberfläche mit der jeweiligen Anzeige verläuft und daß am vorderen Ende des Lampenkörpers der jeweiligen Diode eine Linse in der Form eines Kegelstumpfs vorgesehen ist, da damit Fokussierungspunkte von lichtemittierenden Dioden ausgeschlossen werden können. Hiefür muß lediglich diese Linse das in die Hauptstrahlrichtung der Diode abgestrahlte Licht zumindest teilweise in die Richtung der jeweiligen Platte umlenken.

In den Figuren ist der Erfindungsgegenstand anhand eines Ausführungsbeispiels beispielsweise dargestellt. Es zeigen
Fig. 1 eine aufgerissene Seitenansicht auf eine Hinweistafel,
Fig. 2 einen Schnitt nach II-II der Fig. 1 und

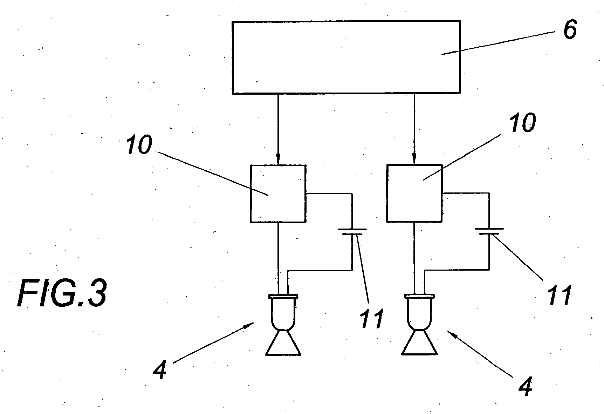

Fig. 3 ein Blockschaltbild zur Ansteuerung der Beleuchtung der Hinweistafel.

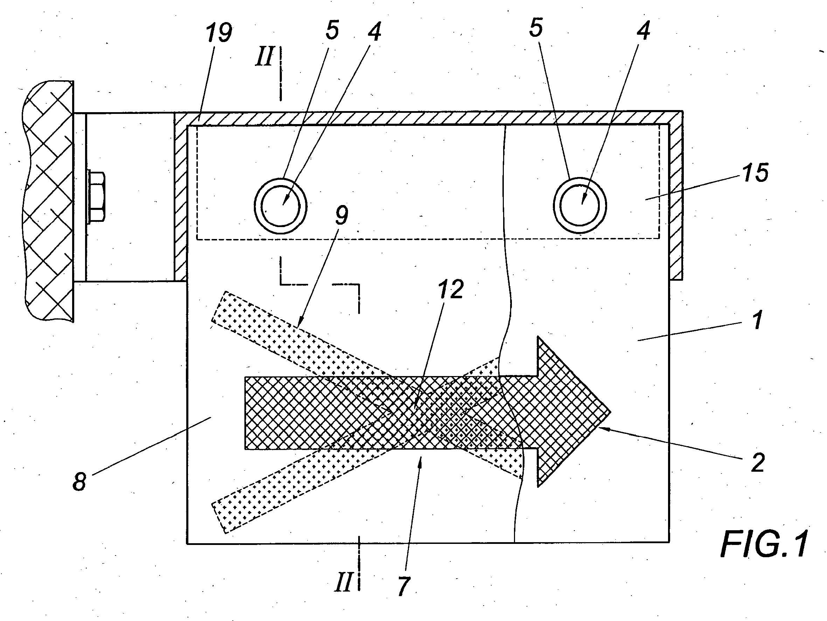

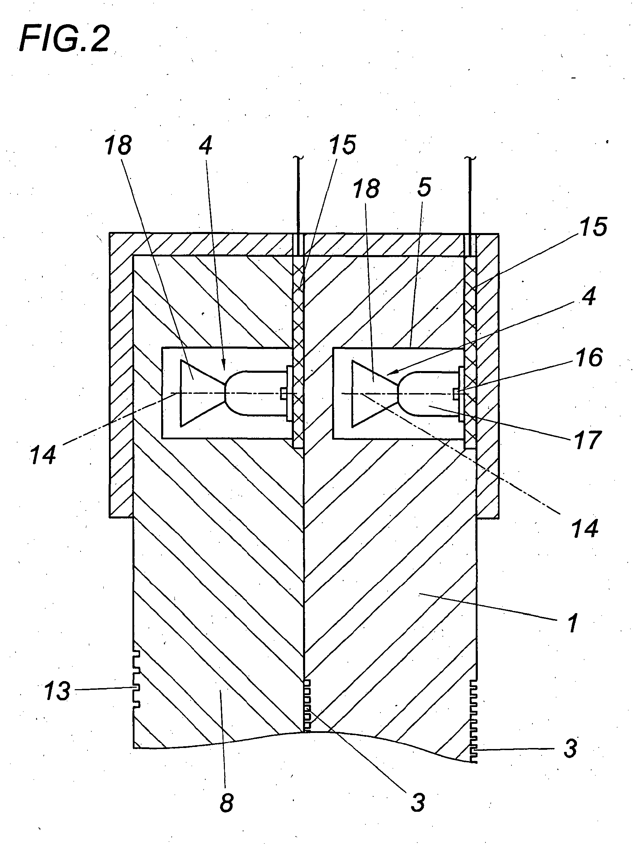

Gemäß dem nach Fig. 1 dargestellten Ausführungsbeispiel wird eine Hinweistafel für eine Vorrichtung zum Evakuieren von Personen gezeigt. Die Hinweistafel weist eine lichtdurchlässige Platte 1 mit einer fixen Anzeige 2 auf. Die Anzeige 2 ist als Richtungspfeil ausgebildet, wobei die Anzeige 2 durch Ausnehmungen 3 der lichtdurchlässigen Platte 1 gebildet wird, was der Fig. 2 besser entnommen werden kann. Es ist aber auch vorstellbar, anstatt von Ausnehmungen 3 eine Folie auf der lichtdurchlässigen Platte 1 aufzubringen bzw. auch auf der lichtdurchlässigen Platte 1 eine Anzeige 2 aufzudrucken. Die Anzeige 2 wird mit Hilfe des in der lichtdurchlässigen Platte 1 geführten Lichts beleuchtet, wofür im Bereich der Stirnseite der Platte 1 eine Lichtquelle 4 vorgesehen ist. Die Lichtquelle 4 ragt in ein Senkloch 5 der lichtdurchlässigen Platte 1 vor, womit eine verbesserte Einkopplung des von der Lichtquelle 4 emittierten Lichts erzielt werden kann. Die Lichtquellen 4 werden mit Hilfe einer Steuereinrichtung 6 ein- oder ausgeschaltet. Um eine energiesparende Hinweistafel mit einem veränderbaren Evakuierungshinweis 7 schaffen zu können, werden zwei lichtdurchlässige Platten 1, 8 hintereinander mit jeweils beleuchteten Anzeigen 2 bzw. 9 angeordnet. Es ist aber vorstellbar mehrere Platten hintereinander anzuordnen. In Abhängigkeit des aus den Anzeigen 2 und 9 darzustellenden E-vakuierungshinweises 7 schaltet die Steuereinrichtung 1 die jeweiligen Lichtquellen 4 der Platten 1 oder 8 ein oder aus. Zu diesem Zweck ist zwischen der Steuereinrichtung 6 und den Lichtquellen 4 eine Schaltstufe 10 vorgesehen, die die jeweilige elektrische Versorgung 11 mit den jeweiligen Lichtquellen 4 verbindet. Somit kann im Falle von Gefahr im sonst stets angezeigten Evakuierungsweg ein durch eine fixe Anzeige 2 dargestellter Evakuierungshinweis, mit einer überlappenden Anzeige 9 als falsch bzw. gefährlich gekennzeichnet werden, so daß eine Fehlleitung an zu evakuierenden Personen nicht eintreten kann. Es kann somit erfindungsgemäß gegenüber bekannten Hinweistafeln ausgeschlossen werden, daß evakuierende Personen irrtümlich falschen Evakuierungshinweisen 7 folgen.

Damit eine nahezu unbeeinträchtigte Sicht auf eine jeweilige Anzeige 2 oder 9 besteht, ist die darzustellende Anzeige 9 der jeweils einen Platte 8 vorgeordneten Platte 1 wenigstens im Überlappungsbereich 12 mit Hilfe von Ausnehmungen 13 in die Plattenoberfläche derart eingebracht, daß die Anzeige 2 der dahinterliegenden anderen Platte 1 sichtbar bleibt. Dies wird mit Hilfe einer aufgelockerten Gravur 14 gebildet, mit der eine Sicht durch die Anzeige 9 auf die Anzeige 2 möglich ist. Somit ist zumindest in deren Überlappungsbereich 12 die Dichte der nebeneinander liegenden Ausnehmungen 13 der vorgeordneten Platte 8 geringer als die Dichte der nebeneinander liegenden Ausnehmungen 3 der dahinter liegenden Platte 1. Die Ausnehmungen 3 bzw. 13 sind auf konstruktive einfache Weise in der Art eines Rasters bzw. Musters in die Plattenoberfläche eingebracht.

Es ist aber vorstellbar, auf der Platte 1 die Anzeige 2 in Form von Ausnehmungen 3 zu bilden, sondern die Anzeige 2 gedruckt aufzubringen. Wichtig ist nur, daß die vorgelagerte Anzeige 9 wenigstes im Überlappungsbereich von Ausnehmungen 13 gebildet wird, weil ja eine Sicht durch diese Anzeige 9 auf die Anzeige 2 gegeben sein muß. Es ist ebenso durchaus vorstellbar, mehr als zwei lichtdurchlässige Platten mit Anzeigen hintereinander anzuordnen, um so beispielsweise eine von zwei Seiten optisch gleich einsehbare Hinweistafel zu schaffen.

Die Lichtquellen 4 sind auf Leitungsplatten 15 vorgesehen, die vorteilhaft eine lichtdurchlässige Abschirmung der Lichtquellen der jeweiligen Platten 1, 8 zueinander bilden. Somit können die jeweiligen Lichtquellen 4 keine unerwünschte Beleuchtung der jeweils anderen lichtdurchlässigen Platten 1 bzw. 8 erzeugen. Die Lichtquellen 4 sind als lichtemittierende Dioden 16 ausgeführt deren Hauptabstrahlrichtung 16a annähernd parallel zur Flächennormalen der Plattenoberfläche mit den jeweiligen Anzeige 2 oder 9 verläuft. Am vorderen Ende des Lampenkörpers 17 ist eine Linse in Form eines Kegelstumpfs 18 vorgesehen, die die Hauptabstrahlrichtung 16a in Richtung der Platte umlenkt, so daß keine diodenspezifische Fokusierungspunkte bei der Beleuchtung der Anzeigen 2 bzw. 9 entstehen. Die Hinweistafel weist eine Montagehalterung 19 auf, mit der eine Wandmontage ermöglicht wird.

## Patentansprüche

1. Hinweistafel zum Evakuieren von Personen, die wenigstens zwei hintereinander angeordnete lichtdurchlässige Platten (1, 8) mit einen Evakuierungshinweis (7) darstellenden, fixen Anzeigen (2, 9), je eine im Bereich der Stirnseiten der Platten (1, 8) angeordnete Lichtquelle (4) zur Beleuchtung der jeweiligen Anzeige (2, 9) der Platten (1, 8) und eine mit der Beleuchtung der Anzeigen (2, 9) der Platten (1, 8) verbundene Steuereinrichtung (6) zum Ein- und Ausschalten der Lichtquelle (4) aufweist, wobei die Anzeige (9) der vorgeordneten Platte (8) im Überlappungsbereich (12) der Anzeigen (2, 9) der Platten (1, 8) in Form von Ausnehmungen (13) in die Plattenoberfläche eingebracht ist, wobei in Abhängigkeit des aus den fixen Anzeigen (2, 9) darzustellenden Evakuierungshinweises (7) die Steuereinrichtung (6) die jeweilige Lichtquelle (4) der Platten (1, 8) ein- oder ausschaltet, wobei diese Ausnehmungen (13) gegenüber der Anzeige (2) der Platte (1) derart im Überlappungsbereich (12) angeordnet sind, dass durch die Platte (8) hindurch wenigstens die Anzeige (2) der dahinter liegenden Platte (1) sichtbar bleibt, um neben einem voneinander unabhängigen Betrieb der fixen Anzeigen (2, 9) auch eine Mischung der beiden Anzeigen (2, 9) zu ermöglichen.

2. Hinweistafel nach Anspruch 1, **dadurch gekennzeichnet, dass** die mit Hilfe von Ausnehmungen (3, 13), insbesondere Gravuren, gebildeten Anzeigen (2, 9) in der Art eines Musters, insbesondere Rasters, in die Plattenoberfläche eingebracht sind.

3. Hinweistafel nach Anspruch 2, **dadurch gekennzeichnet, dass** zumindest im Überlappungsbereich (12) die Dichte der nebeneinander liegenden Ausnehmungen (13) der vorgeordneten Platte (8) geringer als die Dichte der nebeneinander liegenden Ausnehmungen (3) der dahinter liegenden Platte (1) ist.

4. Hinweistafel nach einem der Ansprüche 1 bis 3, **dadurch gekennzeichnet, dass** zwischen den Lichtquellen (4) der jeweiligen Platten (1, 8) eine lichtundurchlässig Abschirmung vorgesehen ist.

5. Hinweistafel nach einer der Ansprüche 1 bis 4, **dadurch gekennzeichnet, dass** als Lichtquellen (4) lichtemittierende Dioden (16) vorgesehen sind.

6. Hinweistafel nach Anspruch 5, **dadurch gekennzeichnet, dass** die Hauptabstrahlrichtung (16a) der Dioden (16) annähernd parallel zur Flächennormalen der Plattenoberfläche mit der jeweiligen Anzeige (2, 9) verläuft und dass am vorderen Ende des Lampenkörpers (17) der jeweiligen Diode (16) eine Linse (18) in der Form eines Kegelstumpfs vorgesehen ist, welche Linse (18) das in die Hauptabstrahlrichtung (16a) der Diode (16) abgestrahlte Licht zumindest teilweise in die Richtung der jeweiligen Platte (1, 8) umlenkt.

## Claims

1. An information sign for the evacuation of persons, comprising at least two translucent plates (1, 8) which are arranged one behind the other and comprise fixed displays (2, 9) representing evacuation information (7), further comprising one respective light source (4) arranged in the region of the face ends of the plates (1, 8) for illuminating the respective display (2, 9) of the plates (1, 8), and a control device (6) which is connected to the lighting of the displays (2, 9) of the plates (1, 8) for switching the light source (4) on and off, wherein the display (9) of the front plate (8) is introduced in form of recesses (13) in the surface of the plate in the overlapping region (12) of the displays (2, 9) of the plates (1, 8), wherein the control device (6) switches the respective light source (4) of the plates (1, 8) on and off depending on the evacuation information (7) to be displayed on the fixed displays (2, 9), wherein said recesses (13) are arranged relative to the display (2) of the plate (1) in the overlapping region (12) in such a way that at least the display (2) of the plate (1) situated behind remains visible through the plate (8) in order to also enable a mixture of both displays (2, 9) in addition to a mutually independent operation of the fixed displays (2, 9).

2. An information sign according to claim 1, **characterized in that** the displays (2, 9) which are formed by means of recesses (3, 13) and engravings in particular are introduced in the manner of a pattern, especially a grid, into the plate surface.

3. An information sign according to claim 2, **characterized in that** the density of the adjacently disposed recesses (13) of the front plate (8) is lower at least in the overlapping region (12) than the density of the adjacently disposed recesses (13) of the plate (1) situated behind.

4. An information sign according to one of the claims 1 to 3, **characterized in that** an opaque screen is provided between the light sources (4) of the respective plates (1, 8).

5. An information sign according to one of the claims 1 to 4, **characterized in that** light-emitting diodes (16) are provided as light sources (4).

6. An information sign according to claim 5, **characterized in that** the main radiation direction (16a) of the diodes (16) extends approximately parallel to the surface normal of the plate surface with the respective display (2, 9), and that a lens (18) in form of a truncated cone is provided at the front end of the lamp body (17) of the respective diode (16), which lens (18) deflects the light radiated in the main radiation direction (16a) of the diode (16) at least partly in the direction of the respective plate (1, 8).

## Revendications

1. Panneau signalétique pour l'évacuation de personnes, comprenant au moins deux plaques translucides (1, 8) disposées l'une derrière l'autre avec des affichages fixes (2, 9) représentant une signalétique d'évacuation (7), une source lumineuse (4) disposée au niveau des faces frontales de chacune des plaques (1, 8) pour éclairer l'affichage (2, 9) correspondant des plaques (1, 8) et un dispositif de commande (6) relié à l'éclairage des affichages (2, 9) des plaques (1, 8) pour allumer et éteindre la source lumineuse (4), dans lequel l'affichage (9) de la plaque disposée devant (8) est introduit dans la zone de chevauchement (12) des affichages (2, 9) des plaques (1, 8) sous la forme d'évidements (13) dans la surface des plaques, dans lequel le dispositif de commande (6) allume ou éteint la source lumineuse (4) de chaque plaque (1, 8) en fonction de la signalétique d'évacuation (7) que doivent représenter les affichages fixes (2, 9), dans lequel ces évidements (13) sont disposés dans la zone de chevauchement (12) par rapport à l'affichage (2) de la plaque (1) de telle manière qu'au moins l'affichage (2) de la plaque située derrière (1) reste visible à travers la plaque (8) pour permettre, outre le fonctionnement indépendant l'un de l'autre des affichages fixes (2, 9), une combinaison des deux affichages (2, 9).

2. Panneau signalétique selon la revendication 1, **caractérisé en ce que** les affichages (2, 9) créés à l'aide d'évidements (3, 13), en particulier de gravures, sont ménagés dans la surface de la plaque selon un motif, en particulier une quadrillage.

3. Panneau signalétique selon la revendication 2, **caractérisé en ce qu'**au moins dans la zone de chevauchement (12), la densité des évidements (13) contigus de la plaque disposée devant (8) est inférieure à la densité des évidements (3) contigus de la plaque disposée derrière (1).

4. Panneau signalétique selon l'une des revendications 1 à 3, **caractérisé en ce qu'**il est prévu entre les sources lumineuses (4) des différentes plaques (1, 8) un écran qui ne laisse pas passer la lumière.

5. Panneau signalétique selon l'une des revendications 1 à 4, **caractérisé en ce que** les sources lumineuses (4) prévues sont des diodes électroluminescentes (16).

6. Panneau signalétique selon la revendication 5, **caractérisé en ce que** la direction principale de rayonnement (16a) des diodes (16) est approximativement parallèle à la normale à la surface des plaques avec l'affichage (2, 9) correspondant et **en ce qu'**il est prévu à l'extrémité antérieure du bloc-lampe (17) de chaque diode (16) une lentille (18) tronconique, laquelle lentille (18) dévie au moins partiellement la lumière émise dans la direction principale de rayonnement (16a) de la diode (16) en direction de la plaque (1, 8) correspondante.
